# EUROPÄISCHE PATENTSCHRIFT

(11) **EP 0 567 892 B1**
(45) Veröffentlichungstag und Bekanntmachung des Hinweises auf die Patenterteilung: **17.03.1999**
(21) Anmeldenummer: 93106345.7
(22) Anmeldetag: 20.04.1993
(51) Int. Cl.: G01N 35/04, G01N 21/64

(54) **Bearbeitungsstation zur Durchführung von Fluoreszenz Polarisations-Messungen in einer Analysenvorrichtung**
Processing station for performing fluorescence polarisation measurements in an analyser
Poste de travail pour mesurer la polarisation de fluorescence dans un analyseur

(30) Priorität: 30.04.1992 CH 1390/92
(43) Veröffentlichungstag der Anmeldung: 03.11.1993
(73) Patentinhaber: F. HOFFMANN-LA ROCHE AG, 4002 Basel (CH)
(72) Erfinder: Schacher, Gottlieb, CH-6030 Ebikon (CH)
(74) Vertreter: AMMANN INGENIEURS-CONSEILS EN PROPRIETE INTELLECTUELLE SA BERNE

(56) Entgegenhaltungen:
- WO-A-92/05448
- US-A- 3 322 958
- IEEE ENGINEERING IN MEDICINE AND BIOLOGY Bd. 4, Nr. 1, März 1985, NEW YORK Seiten 14 - 17 HOLEN & SCHRIER 'COMMERCIAL DEVELOPMENT OF A FLUORESCENCE POLARIZATION INSTRUMENT FOR CLINICAL USE'

## Beschreibung

Die Erfindung betrifft eine Bearbeitungsstation zur Durchführung von Fluoreszenz-Messungen an Proben, die sich in einer Vielzahl von Küvetten befinden, die in einem Analysengerät zur Durchführung von chemischen und biochemischen Analysen untersucht werden, wobei das Analysengerät eine Transporteinrichtung zum Transport von Küvetten enthält und die Bearbeitungsstation von der Transporteinrichtung beabstandet ist.

Automatische Analysenvorrichtungen arbeiten in der Regel nach dem Prinzip, dass die Analysenproben oder Teilmengen davon in Küvetten verbracht, anschliessend einer Reihe von Bearbeitungsschritten wie Zufügen (Pipettieren) von Reagenzien, Mischen, Inkubieren etc. unterworfen und dass entweder mehrmals während der Bearbeitung und/oder einmal am Ende der Bearbeitung Messungen der erfolgten Reaktionen vorgenommen werden. Dabei erfolgt der Ablauf üblicherweise entweder so, dass die Küvetten mit den Analysenproben in fester Reihenfolge auf einem Transportmittel angeordnet werden und verschiedene Bearbeitungsstationen durchlaufen oder dass bei der sog. Batch-Bearbeitung, wie sie bei den sog. Zentrifugalanalysengeräten üblich ist, alle auf einem Träger (Rotor) angeordneten Küvetten quasi gleichzeitig den Bearbeitungsschritten und den Messungen unterworfen werden. Nach diesen Prinzipien arbeitende Analysensysteme leisten gute Dienste in grossen Kliniken und Analysenzentren, in denen grosse Probenzahlen verarbeitet werden müssen.

Es hat sich aber angesichts der heutigen Vielfalt der möglichen Analysen und der medizinischen Anforderungen, vor allem bei Untersuchungen im Bereich der klinischen Chemie herausgestellt, dass die bisher üblichen für den Durchsatz grosser Probenmengen geeigneten Analysenautomaten zu wenig flexibel sind, um auf einzelne Patienten bzw. Krankheitsbilder spezifisch zugeschnittene Analysenprofile (Full Random Access) zu erstellen und trotzdem eine grosse Zahl von Patientenproben zu bewältigen. Dabei sollten neben photometrische Extinktionsmessungen der zu untersuchenden Probe-Reagenz-Gemische auch Fluoreszenz-Polarisations-Messungen solcher Gemische im selben Analysengerät möglich sein.

Die U.S. Patentschrift Nr. 3,322,958 beschreibt ein Photometer, das eine Messkammer hat, in der ein Proberörchen eingeführt werden kann, um eine Fluoreszenzmessung des im Proberörchen enthaltenen Probe durchzuführen. Ein drehbarer Proberöhrchenhalter ist auf eine Basisplatte des Photometers montiert und dient als Transporteinrichtung zum Transport von Proberörchen, die in Oeffungen des Proberöhrchenhalters angeordnet sind, welche entlang eines Kreises angeordnet und voneinander gleichmässig beabstandet sind. Eine ebenfalls auf die Basisplatte des Photometers montierte, manuell betätigte Umsetz- und Positioniereinrichtung ermöglicht, mittels eines Druckknopfs einzelne Proberöhrchen nacheinander vom Proberöhrchenhalter in die Messkammer des Photometers gegen den Gegendruck einer dort angeordneten Feder einzuführen, dort während der Fluoreszenzmessung positioniert zu halten, und nach dieser Messung durch Loslassen des Druckknopfs das Proberöhrchen von der Messkammer zurück in die Oeffnung des Proberöhrchenhalters zu bringen, wo er vor der Messung war. Der Proberöhrchenhalter und die Umsetz- und Positioniereinrichtung sind miteinander mechanisch verbunden und so eingerichtet, dass bei jedem Loslassen des Druckknopfs der Umsetz- und Positioniereinrichtung der Proberöhrchenhalter um einen Winkel gedreht wird, der das nächste Proberöhrchen in die geeignete Lage für seine Einführung in die Messkammer bringt.

Die WO-A-92/05448 beschreibt ein Analysengerät, das eine Messstelle zur Durchführung von Fluoreszenzmessungen und eine Umsetzt- und Positioniereinrichtung enthält, mit der jeweils ein einzelnes Proberöhrchen mittels eines Greifers in die Messstelle eingeführt und davon entfernt wird. Während einer Fluoreszenzmessung wird das in der Messstelle positionierte Proberöhrchen mittels einer automatisch geschlossenen bzw. geöffneten Blende von Streulicht abgeschirmt. Der offene bzw. geschlossene Zustand dieser Blende wird mittels optoelektronischen Sensoren festgestellt, um Schaden zu vermeiden, die entstehen könnten, falls die Blende bei der Einführung eines Proberöhrchens in die Messposition geschlossen wäre.

Der Erfindung liegt daher allgemein die Aufgabe zugrunde, ein Analysensystem bereitzustellen, das den oben erwähnten Anforderungen Rechnung trägt, indem eine grosse Zahl von Analysenproben mit grösster Flexibilität bezüglich des an der einzelnen Probe durchgeführten Analysenprofils verarbeitet werden können. Im Speziellen besteht die Aufgabe darin, eine Bearbeitungsstation für ein solches Analysensystem bereit zu stellen, welche die Durchführung von Fluoreszenz-Polarisations-Messungen ermöglicht. Die Aufgabe besteht ferner darin eine Bearbeitungsstation zur Verfügung zu stellen, mit der eine Zeiteinsparung bei der Durchführung der Messungen erzielbar ist.

Erfindungsgemäss wird dies mit einer Bearbeitungsstation erreicht, die folgende Mittel enthält:
a) eine Messeinrichtung zur Durchführung von Fluoreszenz-Polarisationsmessungen einer in einer Küvette enthaltenen Probe, und
b) eine automatisch gesteuerte Umsetz- und Positioniereinrichtung zur Entnahme einzelner Küvetten von einer Position in der Transporteinrichtung, zum Verbringen einer entnommenen Küvette zu einer Messposition in der Messeinrichtung und zum Zurücksetzen der Küvette nach einer solchen Messung auf ihre ursprüngliche Position auf der Transporteinrichtung, wobei die Umsetz- und Positioniereinrichtung Mittel zum wahlweisen Entnehmen einer Küvette aus zwei verschiedenen Küvettenpositionen auf der Transporteinrichtung, zum Verbringen einer entnommenen Küvette zu einer Messposition in der Messeinrichtung und zum Zurücksetzen der Küvette nach einer solchen Messung auf ihre ursprüngliche Position auf der Transporteinrichtung enthält.

Mit einer erfindungsgemässen Bearbeitungsstation wird z.B. aus einem Optionsplatz A auf der Transporteinrichtung eine leere Küvette für eine Leerwertmessung entnommen und aus einem Optionsplatz B eine Küvette entnommen, die eine zu untersuchende Probe enthält. Dadurch wird eine Zeiteinsparung bei der Durchführung der Messungen ermöglicht.

Die erfindungsgemässe Bearbeitungsstation kommt vorzugsweise zum Einsatz in einer Analysenvorrichtung, die in der europäischen Patentanmeldung EP-A-0564907 A1 näher beschrieben ist.

Im folgenden wird anhand der beiliegenden Zeichnungen ein Ausführungsbeispiel der erfindungsgemässen Bearbeitungsstation beschrieben.

Es zeigen:
- Fig. 1: eine erfindungsgemässe Bearbeitungsstation in axonometrischer Darstellung im Moment des Ergreifens einer Messküvette aus dem Rotormagazin.
- Fig. 2: die Bearbeitungsstation gemäss Fig. 1 mit der Messküvette in Messstellung, d.h. in der Position zur Durchführung einer Fluoreszenz-Polarisations-Messung.
- Fig. 3: eine Draufsicht auf die Bearbeitungsstation gemäss Fig. 1 in einer neutralen Ausgangsstellung
- Fig. 4: eine Draufsicht auf die Bearbeitungsstation gemäss Fig. 1 in einer Greifstellung bezüglich des Optionsplatzes A des Rotormagazins
- Fig. 5: eine Draufsicht auf die Bearbeitungsstation gemäss Fig. 2 , bei welcher eine Messküvette in der Messposition in der Messeinrichtung verbracht ist
- Fig. 6: eine Draufsicht auf die Bearbeitungsstation gemäss Fig. 1 in einer Greifstellung bezüglich des Optionsplatzes B des Rotormagazins
- Fig. 7: eine Seitenansicht der Bearbeitungsstation gemäss Pfeil VII in Fig. 4, teilweise geschnitten
- Fig. 8: eine Seitenansicht der Bearbeitungsstation gemäss Pfeil VIII in Fig. 5, teilweise geschnitten.
- Fig. 9: schematisch den Aufbau einer Messeinrichtung zur Durchführung einer Fluoreszenz- Polarisations-Messung der in einer Küvette enthaltenen Probe.

Eine erfindungsgemässe Bearbeitungsstation 3 ist nachstehend beschrieben. Diese ist eine Bearbeitungsstation zur Durchführung einer Fluoreszenz-Polarisations-Messung einer Probe, die sich in einer Küvette 2 befindet, die in einem Analysengerät zur Durchführung von chemischen und biochemischen Analysen untersucht wird.

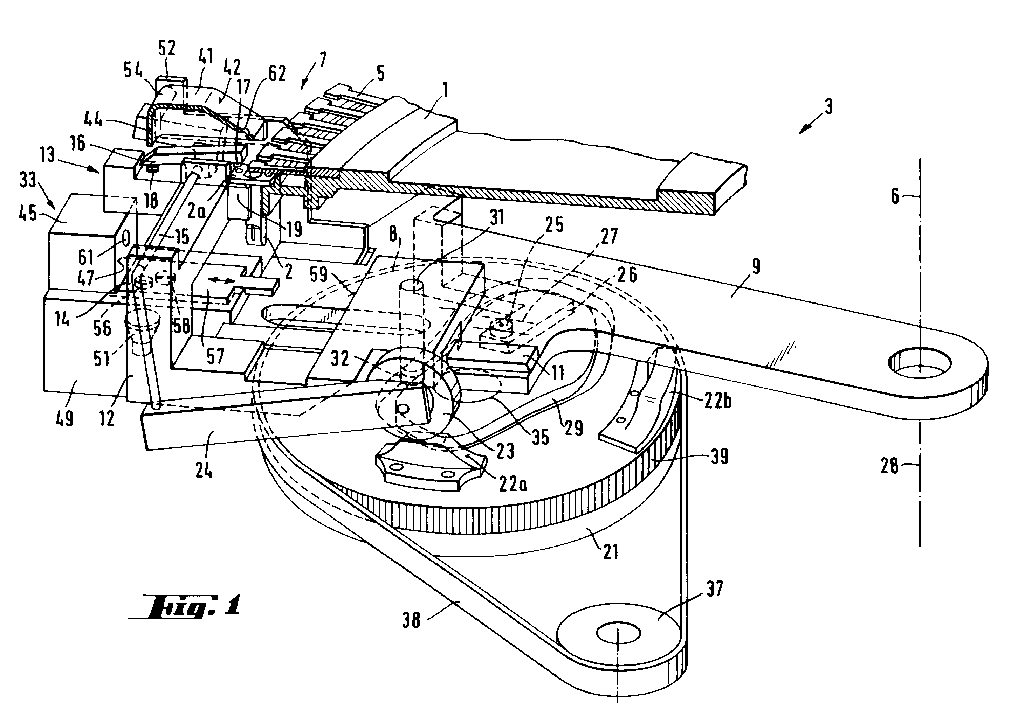

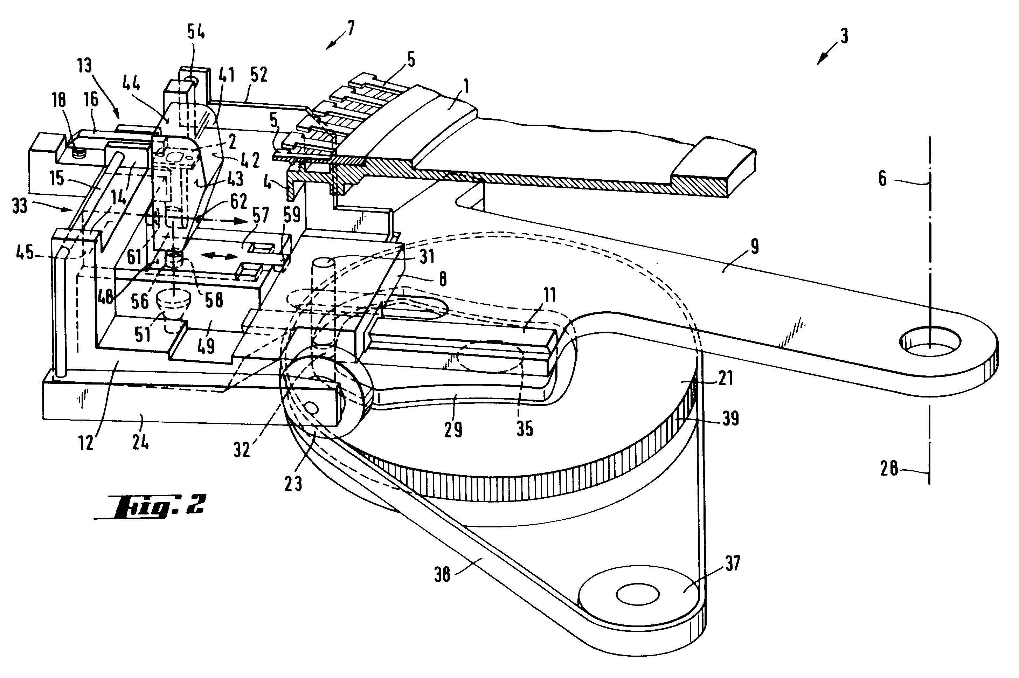

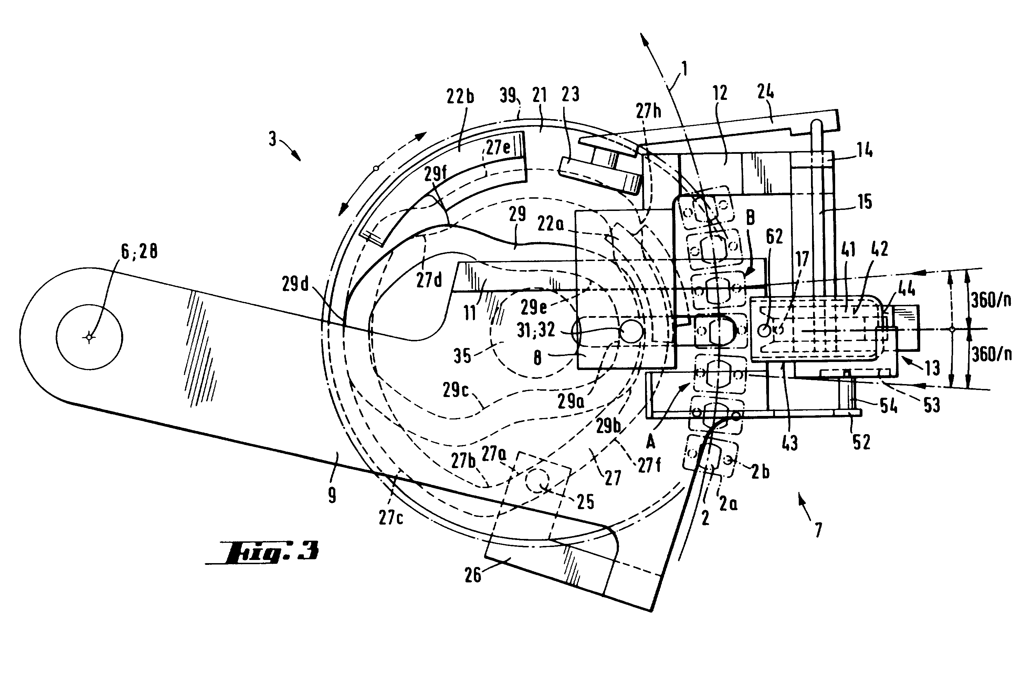

Das Analysengerät enthält ein kreisförmiges Rotormagazin 1, das in Figuren 1,2,7,8 teilweise dargestellt ist. Dieses Rotormagazin dient als Transporteinrichtung zum Transport von Küvetten zu einzelnen, verschiedenen Bearbeitungsstationen, die im Analysengerät um das Rotormagazin angeordnet sind. Das Rotormagazin 1 ist durch einen in den beiliegenden Zeichnungen nicht gezeigten Antrieb um genaue Winkelschritte in beiden Drehrichtungen drehbar.

Die Küvetten 2 sind über ihren Flansch 2a am peripheren Rand 4 des Rotormagazines 1 mittels Blattfedern 5 auf definierten Optionsplätzen im Winkelabstand 360/n Grad gehaltert, wobei n die gesamte Anzahl Optionsplätze darstellt. Das Rotormagazin 1 ist um die Achse 6 drehbar gelagert und beispielsweise über einen rechnergesteuerten Schrittmotor angetrieben (nicht dargestellt), sodass jeder beliebige Optionsplatz des Rotormagazines 1 zu einer erfindungsgemässen Bearbeitungsstation 3 zur Durchführung von Fluoreszenz-Polarisations-Messungen positioniert werden kann.

Die Küvetten 2 werden am äusseren Rand des Rotormagazins gehaltert, indem sie einerseits mit einem an ihrer Oberseite vorhandenen Flansch 2a auf einer ebenen, zur Drehachse des Rotormagazins senkrechten Ringfläche aufliegen und gleichzeitig mit einer ihrer Wandflächen an der im wesentlichen zylindrischen Aussenfläche des Rotormagazins anliegen, sowie andererseits durch jeder Küvettenposition zugeordnete, radial über die Küvette ragende federnde Zungen der Blattfeder 5 gehalten werden, die zu diesem Zweck auf ihrer Unterseite einen in eine im Küvettenflansch 2a angeordnete Vertiefung eingreifenden Vorsprung (nicht gezeigt) aufweisen. Durch die federnde Halterung werden die Küvetten so fest gehalten, dass sie auch bei Drehung des Rotormagazins nicht von selbst herausfallen können. Andererseits erlaubt es die federnde Halterung, die Küvetten manuell oder durch einen mechanischen Greifmechanismus einfach abzunehmen oder aufzustecken.

Eine detaillierte Beschreibung des Rotormagazins und seiner Funktion ist aus der europäischen Patentanmeldung EP-A-0564905 Al ersichtlich.

Ueber das Rotormagazin 1 werden die Küvetten 2, deren Inhalt beispielsweise einer Fluoreszenz-Polarisations-Messung unterzogen werden sollen, in den Wirkungsbereich der Bearbeitungsstation 3 verbracht, die zum Ergreifen einer der Küvetten, Verfahren der ergriffenen Küvette in Meßstellung und Zurücksetzen derselben auf das Rotormagazin nach erfolgter Messung dient.

Die Bearbeitunsstation 3 ist in einer genau definierten Position relativ zum Rotormagazin 1 angeordnet.

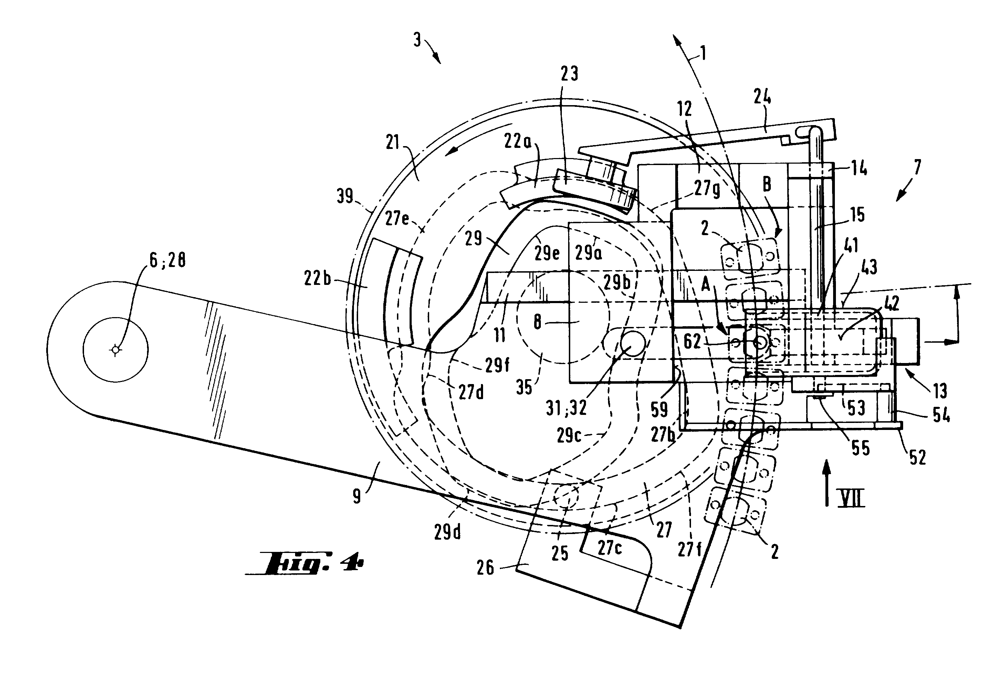

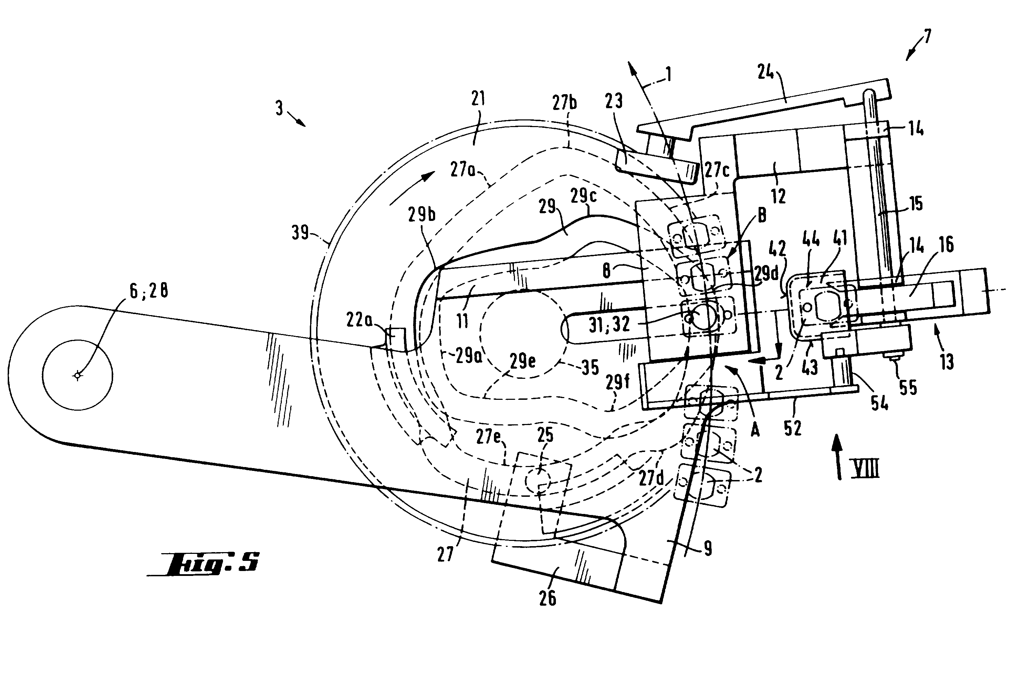

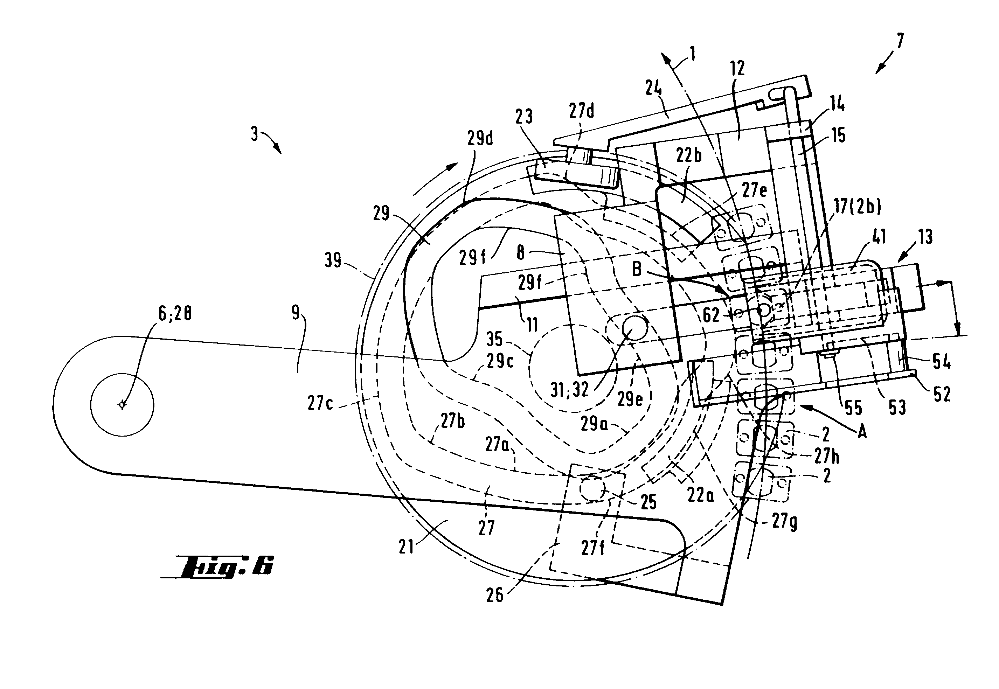

Wie insbesondere aus den Figuren 1 und 2 ersichtlich, enthält die Bearbeitungsstation 3 eine Messeinrichtung 33 zur Durchführung von Fluoreszenz-Polarisations-Messungen einer in einer Küvette 2 enthaltenen Probe, und eine Umsetz- und Positioniereinrichtung zur Entnahme einzelner Küvetten 2 vom Rotormagazin 1, zum Verbringen einer entnommenen Küvette zu einer Messposition in der Messeinrichtung 33 und zum Zurücksetzen der Küvette nach einer solchen Messung auf ihre ursprüngliche Position auf dem Rotormagazin.

Der Aufbau der Umsetz-und Positioniereinrichtung ist wie folgt:

Eine Greifeinrichtung 7 wirkt über einen Schlitten 8 mit einer auf einem Schwenkarm 9 angeordneten Führungsbahn 11 zusammen, dass sich eine horizontale, radial zur Drehachse 6 des Rotormagazins 1 gerichtete Längsführung für die Greifzange 13 der Greifeinrichtung 7 ergibt.

An einem vom Schlitten 8 abkragenden Haltearm 12 ist die Greifzange 13 angeordnet, dessen Greifebene mit der Transportebene der Küvetten 2 im Rotormagazin 1 zusammenfällt. Die Greifzange 13 ist somit radial zur Rotormagazinachse 6 bewegbar und mit den Küvetten 2 in Eingriff bringbar.

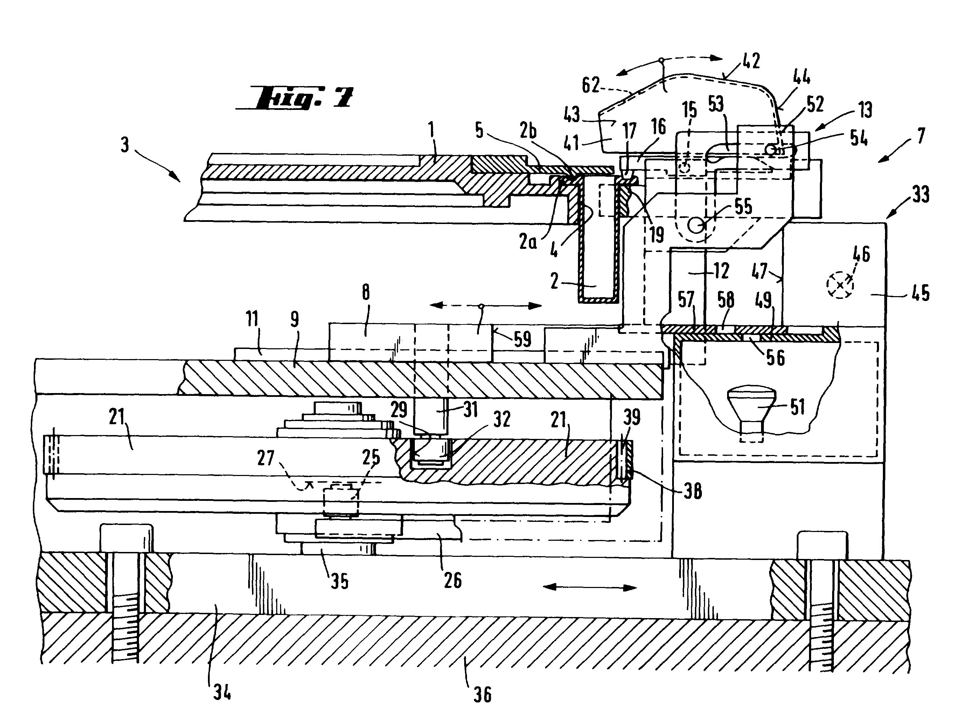

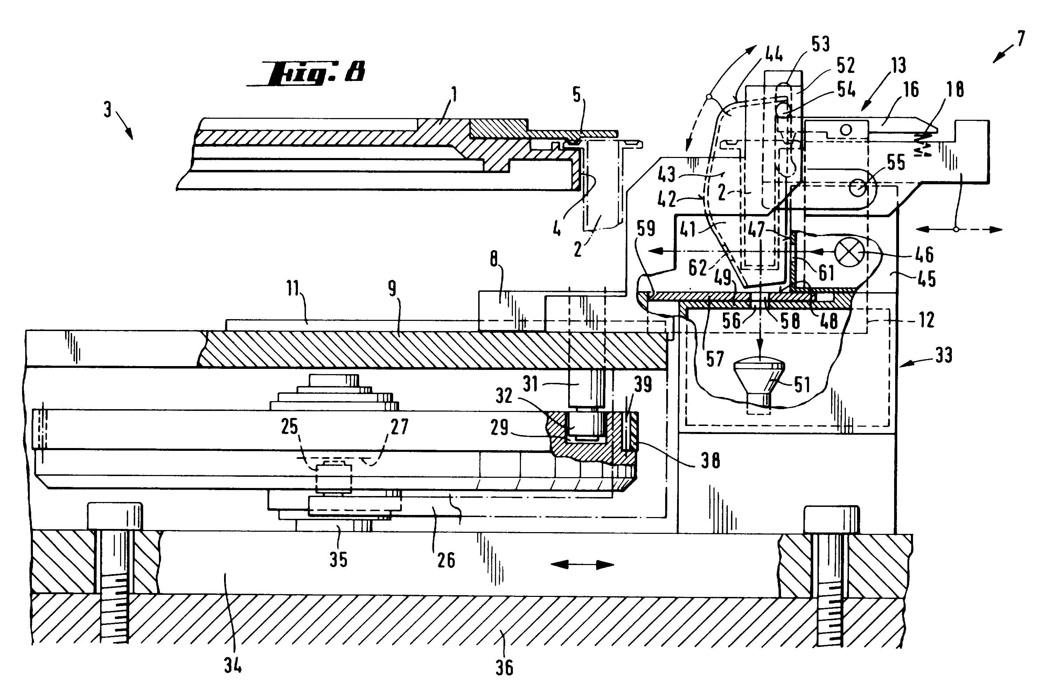

In Lagerböcken 14 am Greifzangenhalterarm 12 ist eine Greifersteuerwelle 15 gelagert, an dessen einen Ende das bewegliche Greiforgan 16 in Form einer Wippe drehfest verbunden ist. Das rotornahe Ende des Greiforganes 16 weist eine nach unten gerichtete Nase 17 zum formschlüssigen Eingriff in eine Ausnehmung 2b (siehe Fig. 3) eines Küvettenflansches 2a auf. Das rotorferne Ende des Greiforganes 16 stützt sich am Greifzangenhaltearm 12 über eine Druckfeder 18 derart ab, dass eine Schliessbewegung des Greiforganes zustande kommt und einen Küvettenflansch 2a gegen einen am Greifzangenhaltearm 12 angeformten Küvettenflanschauflagetisch 19 drücken kann. Durch oben beschriebene Einrichtung kann bei entsprechender Steuerung eine Küvette 2 zuverlässig ergriffen, aus dem Rotormagazin 1 entnommen, in die Messebene zu einer Messposition verbracht und wieder in das Rotormagazin 1 zurückgebracht werden.

Die Greifbewegung des Greiforganes 16 wird von auf der Oberseite einer Steuerscheibe 21 angeordneten Nocken 22a, 22b erzeugt und wird über eine Laufrolle 23, einen Schwenkkurbelarm 24 auf die Greiforgansteuerwelle 15 übertragen.

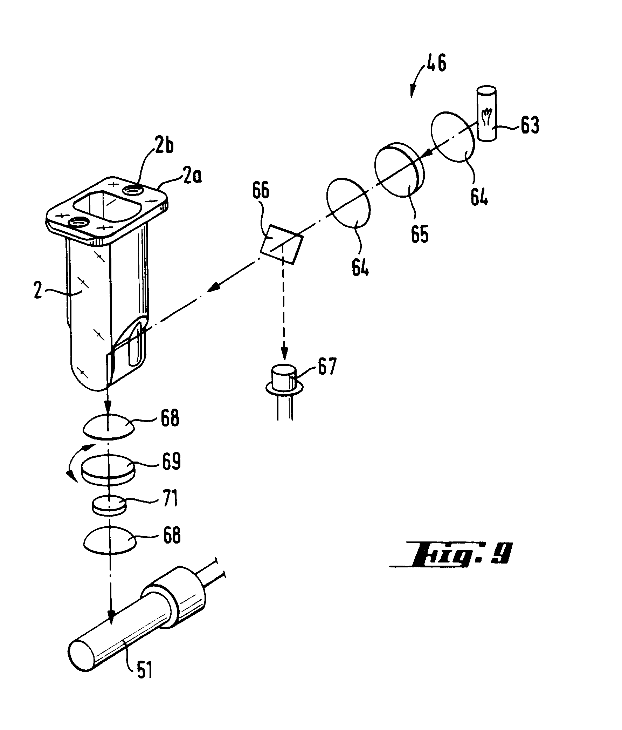

Der Schwenkarm 9 ist über einen eine Führungsrolle 25 aufweisenden Ausleger 26 in einer Steuernut 27, welche unterseitig der Steuerscheibe 21 eingelassen ist, derart um seine Schwenkachse 28, welche mit der Drehachse 6 des Rotormagazines 1 zusammenfällt, bewegbar, dass er aus einer neutralen Position (Fig. 3) heraus, bei einer entsprechenden Drehung der Steuerscheibe 21, in die eine oder andere Richtung, im wesentlichen drei Winkelstellungen einnehmen kann, nämlich:
1. Greifzange 13 steht in Radialflucht der Küvette 2 im Optionsplatz A (Fig. 4) des Rotormagazins 1
2. Greifzange 13 befindet sich in der Messebene (Fig. 5)
3. Greifzange 13 befindet sich in Radialflucht der Küvette 2 des Optionsplatzes B (Fig. 6) des Rotormagazins 1.

Beispielsweise kann der Schwenkwinkel des Schwenkarmes 9 vom Optionsplatz A, bzw. B zur Messebene jeweils 360/n Grad betragen, d.h. der volle Schwenkwinkel des Schwenkarmes 9 von A nach B betrüge 2 x 360/n Grad.

Das radiale Verfahren der Greifzange 13 in Richtung der Rotormagazindrehachse 6 zum Ergreifen einer Küvette 2 aus dem Optionsplatz A oder B, sowie das radiale Zurückziehen, bzw. das Entfernen einer Küvette 2 aus dem Rotormagazin 1 und verbringen dieser in eine Messposition in der Messeinrichtung 33, sowie in umgekehrter Richtung beim Zurückbringen der Küvette 2 in das Rotormagazin 1, wird durch eine in die Oberseite der Steuerscheibe 21 eingelassene Steuernut 29 bewirkt. Der Schlitten 8 der Greifeinrichtung 7 steht über einem Stift 31 und einer Führungsrolle 32 mit dieser Steuernut 29 in Wirkverbindung. Die Greifeinrichtung 7 kann, radial zur Rotordrehachse 6 gesehen, aus einer neutralen Position (Fig. 3) heraus zwei weitere Positionen, gleich bei welcher Drehrichtung der Steuerscheibe 21, erreichen, nämlich:
1. eine rotornahe Position (Fig. 4, 6 und 7); zum Ergreifen, bzw. Uebergeben einer Küvette 2 aus dem Rotormagazin 1
2. eine rotorferne Position (Messposition); Fig. 5 und 8

Die Steuerscheibe 21 ist auf einer an einer Grundplatte 34 befestigten Achse 35 drehbar gelagert, derart, dass der Ausleger 26 des Schwenkhebels 9 zwischen der Grundplatte 34 und der Steuerscheibe 21 Platz findet und die Führungsrolle 25 in die Steuernut 27 eingreifen kann. Die Grundplatte 34 ist zur genauen Positionierung der Greifeinrichtung 7 zum Rotormagazin 1 justierbar am Gehäuseboden 36 befestigt (Fig. 7, 8). Der nicht dargestellte Motor treibt über ein Zahnrad 37, einen Zahnriemen 38, die Steuerscheibe 21, welche am Aussenumfang eine entsprechende Verzahnung 39 aufweist, an (Fig. 1 und 2). Die Drehung der Steuerscheibe ist rechnergesteuert und überwacht.

Die Funktion und das Zusammenwirken der oben beschriebenen Elemente der Umsetz- und Positioniereinrichtung ist wie folgt:

Da die Steuernuten 27, 29 auf einer gemeinsamen Steuerscheibe 21 angeordnet sind, und somit synchron über einen rechnergesteuerten Schrittmotor (nicht dargestellt) angetrieben werden, überlagern sich die Schwenkbewegungen des Schwenkarmes 9 mit der radial zur Rotormagazinachse 6 gerichteten linearen Bewegungen der Greifeinrichtung 7 derart, dass eine Gesamtbewegung, wie folgt, zustande kommt:

Wenn sich die Greifeinrichtung 7 in einer neutralen Position gemäss Fig. 3 befindet, greifen die Führungsrollen 25, 32 des Schwenkarmes 9 und der Greifeinrichtung 7 in entsprechende Abschnitte 27a, 29a der Steuerkurven der Steuerscheiben 27,29 ein.

Sobald das Rotormagazin 1 in einer geeigneten Stellung gestoppt wird, kann eine Küvette 2 durch entsprechende Drehrichtung der Steuerscheibe 21 aus dem Optionsplatz A oder B entnommen werden.

Beim Drehen der Steuerscheibe 21 entgegen dem Uhrzeigersinn wird zunächst der Schwenkarm 9, gesteuert durch den Abschnitt 27b der Steuernut 27, um 360/n Grad im Uhrzeigersinn verschwenkt und verharrt dort (Abschnitt 27c der Steuerkurve 27) vor dem Optionsplatz A des Rotormagazins 1, bzw. vor der dort befindlichen Küvette 2. Die Greifeinrichtung 7 wird nun über den Schlitten 8, bzw. Führungsrolle 32 durch den Abschnitt 29b der Steuerkurve 29 in Richtung Rotor 1 verfahren. Währenddessen läuft die Rolle 23 des Greifzangenöffungsmechanismus 15, 24 auf eine fest auf der Steuerscheibe 21 angeordnete Steuernocke 22a auf und öffnet die Greifzange 13. Ist nun die Greifzange 13 in Greifposition, bewirkt die Nocke 22a, bzw. die Druckfeder 18 ein Schliessen der Greifzange 13. Durch den Abschnitt 29c der Steuerkurve 29 wird nun die Rückbewegung der Greifzange 13 resp. das Herausnehmen der Küvette 2 aus dem Rotor 1 bewirkt (Fig. 4). Ist die Küvette 2 aus dem Rotor 1 entnommen, gelangt die Führungsrolle 25 des Schwenkarmes 9 in den Abschnitt 27d der Steuerkurve 27 und verschwenkt den Schwenkarm 9 um 360/n Grad entgegen dem Uhrzeigersinn und verharrt dort (Abschnitt 27e von 27).

Sobald die Greifzange 13 eine rotorferne Endstellung erreicht hat (Steuerrolle 32 befindet sich im Abschnitt 29d der Steuerkurve 29) ist die vereinzelte Küvette 2 in der Messposition in der Messeinrichtung 33 positioniert. Der Steuerscheibenantrieb wird nun gestoppt und die Messung kann durchgeführt werden.

Nach erfolgter Messung wird der Antrieb der Steuerscheibe 21 im Uhrzeigersinn in Gang gesetzt, sodass die vermessene Küvette 2 im umgekehrten Sinn wieder dem Rotormagazin 1, bzw. dem Optionsplatz A zugeführt wird.

Danach nimmt die Greifeinrichtung 7 wieder eine neutrale Position ein und der Steuerscheibenantrieb wird gestoppt. Während eine Küvette 2 in die Meßstation 33 verbracht ist, kann durchaus das Rotormagazin 1 zwecks Erledigung weiterer Operationen weitergedreht werden. Beim Rückgeben der Küvette 2 auf den Rotor 1 muss allerdings die zuvor angefahrene Stellung wieder vorliegen.

Wenn die Greifzange 13 eine Küvette 2 aus dem Optionsplatz B entnehmen soll, wird die Steuerscheibe 21 aus der neutralen Lage heraus im Uhrzeigersinn angetrieben. Die Steuerrolle 25 des Schwenkarmes 9 läuft nun in einen Abschnitt 27f der Steuerkurve 27 und verschwenkt den Schwenkarm 9 um 360/n Grad entgegen dem Uhrzeigersinn und verharrt (Abschnitt 27g von 27) in radialer Flucht mit dem Optionsplatz B. Das radiale Verfahren der Greifzange 13 in Richtung Rotorachse 6 erfolgt aufgrund eines Abschnittes 29e der Steuerkurve 29. Eine weitere, auf der Steuerscheibe angeordnete Nocke 22b steuert die Greifbewegung der Greifzange 13. Der Transport der Küvette 2 in die Messposition 33 und zurück erfolgt wie oben bei Optionsplatz A beschrieben. Das Verschwenken des Schwenkarms 9 in die Messebene erfolgt über den Abschnitt 27h der Steuernut 27 und das lineare Verfahren in die Messposition erfolgt über den Abschnitt 29f der Steuernut 29.

Bei der Verwendung der oben beschriebenen, bevorzugten Ausführungsform der Bearbeitungsstation 3 wird z.B. aus dem Optionsplatz A eine leere Küvette für eine Leerwertmessung entnommen und aus dem Optionsplatz B eine Küvette entnommen, die eine zu untersuchende Probe enthält. Dadurch wird eine Zeiteinsparung bei der Durchführung der Messungen ermöglicht.

Bei einer Variante der oben beschriebene Ausführungsform der Bearbeitungsstation 3 die eine vereinfachte Ausführung der Umsetz- und Positioniereinrichtung enthält, wird die Küvette 2 stets aus derselben Küvettenposition auf dem Rotormagazin 1 entnommen. Diese Variante findet bei Analysengeräten Verwendung, bei denen die vorgesehenen Zeitabläufe erlauben, auf die Möglichkeit zu verzichten, die Küvetten für Leerwertmessungen und diejenige für die Messungen von Proben aus zwei verschiedenen Optionsplätzen entnehmen zu können.

Die in Figuren 1 und 2 nur schematisch dargestellten Messeinrichtung 33 zur Durchführung von Fluoreszenz-Polarisations-Messungen wird nun anhand der Figuren 7,8 und 9 näher beschrieben.

Fig. 9 zeigt schematisch den optischen Aufbau der Messeinrichtung 33. Diese enthält eine Messlichtquelle 46, die sich im wesentlichen aus einer Halogenlampe 63, einem Linsensystem 64 und einem Interferenzfilter 65 für die Anregungswellenlänge zusammensetzt. Zur Ueberwachung der Lichtintensität bzw. zur rechnerischen Kompensation von Intensitätsschwankungen ist ein Strahlenteiler 66 im Strahlengang der Messlichtquelle 46 angeordnet. Der Strahlenteiler 66 führt einen Teilstrahl aus dem Messlichtstrahl einer Photodiode 67 zu, welche ihrerseits weiter zu verarbeitende Signale abgibt. Der Messlichtstrahl erregt beim Durchlaufen einer Küvette 2 deren Inhalt. Das bei einer Fluoreszenz-Polarisations-Messung von einer in der Küvette 2 enthaltenen Probe emmitiertes Licht, wird über ein Linsensystem 68 und einen Interferenzfilter 71 einem Photomultiplier 51 zugeführt, welcher ein entsprechendes Messsignal abgibt. Durch einen Polarisator 69, der im Strahlengang des von der Probe emmitierten Lichtes angeordnet und von einem nicht gezeigten Motor bewegbar ist, sind zwei verschiedene Messungen möglich, nämlich mit 0 oder 90 Grad Polarisationswinkel.

Wie aus Figuren 1,2,7,8 ersichtlich, ist die Messlichtquelle 46 in einem Gehäuse 45 und der Photomultiplier 51 in einem Gehäuse 49 angeordnet. Wie in den Figuren 7 und 8 dargestellt, ist der Messkanal 56 des Photomultipliers 51 durch einen Schieberverschluss 57 verschliessbar. Nur bei in Messposition befindlicher Küvette 2 ist eine Durchtrittsöffnung 58 des Schiebers fluchtend mit einer Eintrittsöffnung 56 des Gehäuses 49 des Photomultipliers 51. Betätigt wird der Schieber 57 über eine Anschlagfläche 59 am Schlitten 8 der Greifereinrichtung 7, welche direkt auf den Schieber 57 einwirken kann. Die Schliessbewegung kann z.B. durch Blattfedern (nicht dargestellt) erfolgen. Bei geschlossenem Schieber 57 kann der Dunkelstrom des Photomultipliers 51 gemessen werden.

Beim Messvorgang wird das Messlicht horizontal in Richtung auf die Rotormagazinachse 6 über eine Austrittsöffnung 61 (Fig. 8) einer Messküvette 2 zugeführt, durchbringt diese unter Erregung dessen Inhalts und kann den Messraum, zur Vermeidung störender Reflexionen, durch eine kleine Oeffnung 62 in der Frontwand 42, der Haube 41 verlassen.
Die Rückschlüsse auf den Küvetteninhalt zulassende Lichtemmissionen werden durch einen senkrecht unter der Küvette befindlichen Photomultiplier 51 gemessen.

Eine bevorzugte Ausführungsform der Bearbeitungsstation 3 enthält eine Abdeckhaube 41, die am Greifenarm 12 um 90 Grad schwenkbar gelagert ist und eine Frontwand 42, zwei Seitenwände 43 und eine Deckwand hat.

Es ist aus Figuren 1,3,4,6,7 ersichtlich, dass wenn die Küvette 2 von der Greifenzange 13 in Positionen ausserhalb der Messposition in der Messeinrichtung 33 gehalten wird, die Abdeckhaube 41 praktisch waagrecht liegt, so dass die Küvette 2 freiliegt und die Abdeckhaube 41 die erforderlichen Transportvorgänge nicht behindert.

Es ist aus Figuren 2, 5 und 8 ersichtlich, dass wenn die Küvette 2 von der Greifenzange 13 in der Messposition in der Messeinrichtung 33 gehalten wird, die Abdeckhaube 41 um 90 Grad verschwenkt, senkrecht liegt, die Küvette an vier Seiten umschliesst und mit Wänden der Gehäuse 45 und 49 eine Dunkelkammer bildet, die die Küvette von Fremdlicht abschirmt.

Zur Steuerung der Bewegung der Abdeckheube 41 ist am Schwenkarm 9 ein Ausleger 52 befestigt, welcher an dessen Ende einen in eine Steuernut 53 der Haube 41 eingreifenden Steuerzapfen 54 aufweist. Der Steuerzapfen 54 befindet sich in vertikalem Abstand zur Schwenkachse 55 der Haube 41 (Fig. 7, 8). Die Relativbewegung des Steuerzapfens 54 zur Haubenschwenkachse 55, d.h. beim Verfahren des Schlittens 8 entlang der Führung 11 auf dem Schwenkarm 9 während der Bewegung der Greifeinrichtung 7 zur Messposition hin, bewirkt eine entsprechende Drehbewegung (vgl. Figutren 7 und 8) der Abdeckhaube 41, die diese zu der in Figuren 2, 5 und 8 gezeigten Stellung bringt.

Aus der soeben beschriebenen Steuerung der Bewegung der Abdeckhaube 41 ist ersichtlich, dass diese Bewegung durch die gleiche, oben beschriebene Mittel gesteuert wird, die die Bewegungen der Umsetz- und Positioniereinrichtung steuern.

Bei einer hier beispielsweise durchzuführenden Fluoreszenz-Polarisations-Messung ist es erforderlich, die zu messende Küvette 2 von Fremdlicht abzuschirmen, d.h. die Messung erfolgt in einer Dunkelkammer. Die Abdunkelung der Küvette 2 in Messposition 33 erfolgt über eine um 90 Grad am Greiferarm 12 schwenkbar gelagerten Abdeckhaube 41, welche die Küvette 2 während der Messung in der Messeinrichtung 33 praktisch an vier Seiten, nämlich Frontwand 42, zwei Seitenwände 43 und Deckwand 44 umschliesst. In Messposition 33 ist die Greiferzange 13 nebst Küvette 2 und Haube 41 derart an das Gehäuse 45 der Messlichtquelle herangefahren, dass dieses Gehäuse praktisch die Rückwand 47 der Dunkelkammer bildet. Die Bodenwandung 48 der Dunkelkammer ist durch einen Messkanal aufweisenden Gehäuseteil 49 des Photomultiplier 51 gebildet.

In jeder Position der Greifzange 13 ausserhalb der Messposition 33 ist die Haube 41 um 90 Grad verschwenkt, sodass die Küvette 2 freiliegt und die erforderlichen Transportvorgänge nicht behindert werden.

## Patentansprüche

1. Bearbeitungsstation zur Durchführung von Fluoreszenz-Messungen an Proben, die sich in einer Vielzahl von Küvetten befinden, die in einem Analysengerät zur Durchführung von chemischen und biochemischen Analysen untersucht werden, wobei das Analysengerät eine Transporteinrichtung (1) zum Transport einer Vielzahl von Küvetten enthält und die Bearbeitungsstation von der Transporteinrichtung beabstandet ist, wobei
die Bearbeitungsstation folgende Mittel enthält:
a) eine Messeinrichtung (33) zur Durchführung von Fluoreszenz-Polarisationsmessungen einer in einer Küvette enthaltenen Probe, und
b) eine automatisch gesteuerte Umsetz- und Positioniereinrichtung zur Entnahme einzelner Küvetten (2) von einer Position in der Transporteinrichtung (1), zum Verbringen einer entnommenen Küvette zu einer Messposition in der Messeinrichtung (33) und zum Zurücksetzen der Küvette nach einer solchen Messung auf ihre ursprüngliche Position auf der Transporteinrichtung, wobei die Umsetz- und Positioniereinrichtung Mittel zum wahlweisen Entnehmen einer Küvette (2) aus zwei verschiedenen Küvettenpositionen (A bzw. B) auf der Transporteinrichtung (1), zum Verbringen einer entnommenen Küvette zu einer Messposition in der Messeinrichtung (33) und zum Zurücksetzen der Küvette nach einer solchen Messung auf ihre ursprüngliche Position auf der Transporteinrichtung enthält.

## Claims

1. Processing station for performing fluorescence measurements on samples contained in a plurality of test tubes which are examined in an analyser for performing chemical and biochemical analyses, the analyser comprising a transport device (1) for the transport a plurality of test tubes and the processing station being distanced from the transport device, and the processing station comprising the following means:
a) a measuring device (33) for performing fluorescence polarisation measurements on a sample contained in a test tube, and
b) an automatically controlled transfer and positioning device allowing to remove individual test tubes (2) from a position in the transport device (1), to convey a removed test tube to a measuring position in the measuring device (33), and to return the test tube to its initial position on the transport device after such measurement, the transfer and positioning device comprising means for selectively removing a test tube (2) from two different test tube positions (A resp. B) on the transport device (1), for conveying a removed test tube to a measuring position in the measuring device (33) and for returning the test tube to its initial position on the transport device after such measurement.

## Revendications

1. Station de traitement pour la mise en oeuvre de mesures de fluorescence d'échantillons qui se trouvent dans une pluralité d'éprouvettes examinées dans un appareil d'analyse permettant d'effectuer des analyses chimiques et biochimiques, ledit appareil d'analyse comprenant un dispositif pour le transport d'une pluralité d'éprouvettes, et la station de traitement étant disposée à l'écart du dispositif de transport, la station de traitement comprenant les moyens suivants:
a) un dispositif de mesure (33) pour la mise en oeuvre de mesures de la polarisation de la lumière émise par fluorescence d'un échantillon contenu dans une éprouvette, et
b) un dispositif de déplacement et de positionnement à commande automatique permettant de prélever des éprouvettes (2) individuelles d'une position dans le dispositif de transport (1), de transférer une éprouvette prélevée à une position de mesure dans le dispositif de mesure (33) et de ramener à la suite d'une telle mesure l'éprouvette à sa position initiale sur le dispositif de transport, ledit dispositif de déplacement et de positionnement comprenant des moyens permettant de prélever sélectivement une éprouvette (2) de deux positions différentes (A resp. B) d'éprouvettes sur le dispositif de transport (1), de transférer une éprouvette prélevée à une position de mesure dans le dispositif de mesure (33) et de ramener à la suite d'une telle mesure l'éprouvette à sa position initiale sur le dispositif de transport.
